# EUROPÄISCHE PATENTSCHRIFT

(11) **EP 0 673 142 B1**
(45) Veröffentlichungstag und Bekanntmachung des Hinweises auf die Patenterteilung: **01.02.2006**
(21) Anmeldenummer: 95103792.8
(22) Anmeldetag: 15.03.1995
(51) Int. Cl.: H04M 1/24, H04M 3/30, H04M 11/00

(54) **Telekommunikationsendgerät**
Telecommunication terminal
Terminal de télécommunication

(30) Priorität: 16.03.1994 DE 4408976
(43) Veröffentlichungstag der Anmeldung: 20.09.1995
(73) Patentinhaber: SIEMENS AKTIENGESELLSCHAFT, 80333 München (DE)
(72) Erfinder: Thewes, Stefan, Dipl.-Ing., D-46399 Bocholt (DE)

(56) Entgegenhaltungen:
- EP-A- 0 475 749
- EP-A- 0 572 117
- WO-A-94/01963
- DE-A- 3 240 660
- US-A- 4 596 900

## Beschreibung

Die Erfindung betrifft ein Telekommunikationsendgerät gemäß dem Oberbegriff des Patentanspruches 1.

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet. Die von der Nachrichtenquelle erzeugte Nachricht wird von dem Sendegerät über einen Nachrichtenkanal dem Empfangsgerät übertragen, das die empfangene Nachricht anschließend an die Nachrichtensenke abgibt. Die Nachrichtenverarbeitung und -übertragung kann dabei in einer bevorzugten Übertragungsrichtung oder in beiden Übertragungsrichtungen (Duplexbetrieb) erfolgen. Die vorliegende Erfindung bezieht sich auf solche duplexbetriebene Nachrichtensysteme, wie z. B. Telekommunikationssysteme.

"Nachricht" ist ein übergeordneter Begriff, der sowohl für den Sinngehalt (Information) als auch für die physikalische Repräsentation (Signal) steht. Wenn aufgrund dieser Definition im folgenden von einer Nachricht die Rede ist, so sind damit im wesentlichen solche Nachrichten gemeint, in denen Steuerinformationen enthalten sind und die bei der physikalischen Repräsentation durch eine spezielle, verschlüsselte Signalform, z. B. als per Tastendruck eingegebenes, gesprochenes, geschriebenes Code-Wort, charakterisiert sind.

In Abhängigkeit von dem sich dabei ergebenden Nachrichtentyp sind für das vorstehend definierte Telekommunikationssystem jeweils nachrichtentypspezifische Telekommunikationsendgeräte für die Funktionen "Senden" und "Empfangen" erforderlich. Die Frage, was für Telekommunikationsendgeräte letztlich eingesetzt werden, hängt unter anderem auch davon ab, was für ein Nachrichtenkanal im Nachrichtensystem zugrundegelegt wird.

Bei Telekommunikationssystemen sind dies insbesondere leitungsgebundene und/oder drahtlose Telekommunikationskanäle. Im Hinblick darauf sind die als Sende-/Empfangsgeräte ausgebildeten Telekommunikationsendgeräte beispielsweise Fernsprechendgeräte, Bildtelefone, Notephone, Schnurlos- und Mobilfunktelefone, Faksimilegeräte, fernsprechfähige Personal Computer etc.

Überall dort, wo technische Geräte für eine gerätespezifische Funktion eingesetzt werden, müssen diese von einem Kundenservice gewartet werden. Dies gilt auch für die in dem vorstehend definierten Telekommunikationssystem verwendeten Telekommunikationsendgeräte.

Eine solche Gerätewartung erfolgte bisher dadurch, daß nach vorausgehenden langwierigen Telefongesprächen mit dem Kunden letztlich, wenn der Fehler unter Anleitung der Service-Leitstelle vom Kunden nicht selber behoben werden konnte, entweder das Gerät vor Ort beim Kunden vom Kundenservice repariert oder - um solche Reparaturkosten zu vermeiden - das Telekommunikationsendgerät ausgetauscht wurde.

Aus EP 0 572 117 A2 ist eine intelligente Wartungsendeinrichtung (Intelligent Maintenance Termination Unit; MTU) für Telekommunikationsnetze bekannt, die zwischen einem Netzabschluss des Telekommunikationsnetzes und einem dem Telekommunikationsnetz zugeordneten Telekommunikationsendgerät (Customer Premises Equipment, CPE) angeordnet ist. Mit der als separates Gerät ausgebildeten Wartungsendeinrichtung können von einer fernen Servicezentrale aus eine Vielzahl von Funktionen und Zuständen des Telekommunikationsendgerätes, der Wartungsendeinrichtung, der Leitungsverbindung zwischen dem Telekommunikationsendgerät und der Wartungsendeinrichtung sowie der Leitungsverbindung zwischen der Wartungsendeinrichtung und der lokalen Vermittlungsstelle im Telekommunikationsnetz mittels Signalsequenzen (z.B. Touch-Tone-Signale) gesteuert, gewartet, aus- und bewertet oder sogar kontrolliert werden. Damit diese von der Servicezentrale vorgenommene Fernsteuerung bzw. -wartung der Wartungsendeinrichtung mittels der Signalsequenzen überhaupt zielgerichtet durchgeführt werden kann, ist es notwendig, dass der Benutzer des Telekommunikationsendgerätes und der Wartungsendeinrichtung letztere durch Betätigen eines Schalters in der Wartungsendeinrichtung aktiviert.

Die der Erfindung zugrunde liegende Aufgabe besteht darin, ein Telekommunikationsendgerät anzugeben, das einfach und kostengünstig in Bezug auf Fehler zu diagnostizieren und zu warten ist.

Diese Aufgabe wird ausgehend von dem in dem Oberbegriff definierten Telekommunikationsendgerät durch die in dem kennzeichnenden Teil des Patentanspruches 1 angegebenen Merkmale gelöst.

Für die Fehlerdiagnose und Wartung von Telekommunikationsendgeräten, wie z. B. Fernsprechendgeräte mit oder ohne Anrufbeantworterfunktion, drahtlose Fernsprechendgeräte (Schnurlos-, Mobilfunktelefone), Bildtelefone, Notephone (PDA = Personal Digital Assistant), Faksimilegeräte, multifunktionale Telekommunikationsendgeräte, telekommunikationsfähige Personal Computers etc., wird die Hardware des jeweiligen Telekommunikationsendgerätes um eine Empfangseinrichtung für von einer Sendeeinrichtung (z. B. Service-Leitstelle) gesendete Steuerinformationen (z. B. MFV-Codes), Speicherkapazität für Wartungsmenüs und die Software um mikroprozessorspezifische Programmodule für die steuerinformationsabhängige Zugriffssteuerung auf die Wartungsmenüs ergänzt.

Die mikroprozessorspezifischen Programmodule sind dabei vorzugsweise so beschaffen, daß die Zugriffe auf die Wartungsmenüs durch Anzeige in der Service-Leitstelle an der dortigen Sendeeinrichtung für die Steuerinformationen bestätigt werden.

Vorteilhafte Weiterbildungen der Erfindung sind in den Unteransprüchen angegeben.

Ein Ausführungsbeispiel der Erfindung wird anhand der Figuren erläutert. Es zeigen:
Figur 1 den für eine Wartungsferndiagnose geeigneten Aufbau eines als Fersprechendgerät ausgebildeten Telekommunikationsendgerätes,
Figur 2 die Zugriffssteuerung auf Wartungsmenüs des Fernsprechendgerätes anhand der Darstellung eines Ablaufdiagramms.

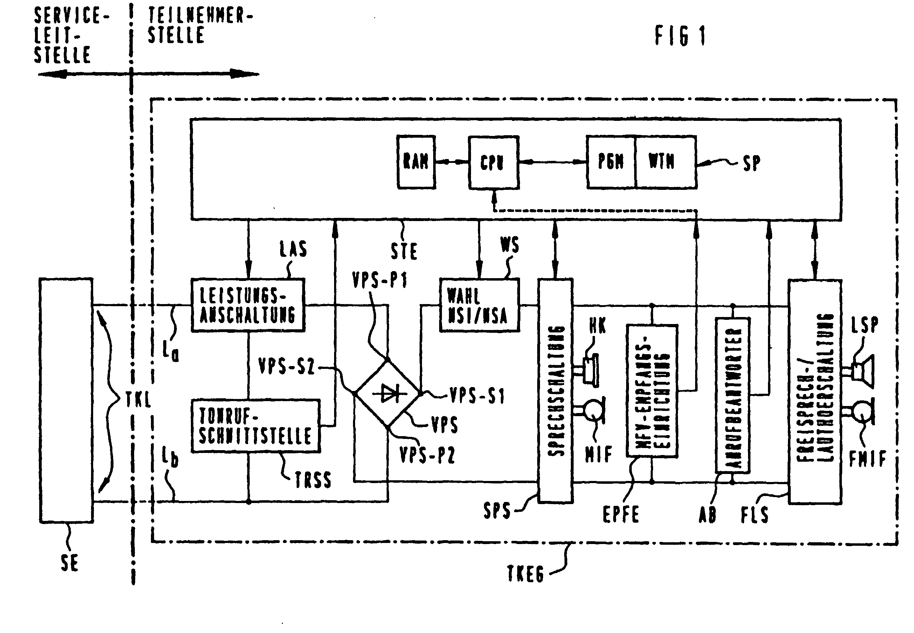

Figur 1 zeigt den prinzipiellen Aufbau eines als Fernsprechendgerät mit Anrufbeantworterfunktion ausgebildeten Telekommunikationsendgerätes TKEG, das zu Wartungszwecken über eine als Fernsprechleitung ausgebildete Telekommunikationsleitung TKL mit zwei Adern, einer ersten Ader Lₐ und einer zweiten Ader L_{b}, verbunden ist. Das Fernsprechendgerät TKEG ist dabei über eine Leitungsanschaltung LAS mit einem nachgeschalteten, als Brückenschaltung ausgebildeten Verpolungsschutz VPS an die Fernsprechleitung TKL mit den Adern Lₐ, L_{b} angeschlossen. Der Verpolungsschutz VPS ist dabei über einen ersten Primär-Brückenschaltungskontakt VPS-P1 mit der Leitungsanschaltung LAS verbunden und über einen zweiten Primär-Brückenschaltungskontakt VPS-P2 an die Ader L_{b} der Fernsprechleitung TKL angeschlossen.

Zwischen der Ader L_{b} der Fernsprechleitung TKL und der Leitungsanschaltung LAS ist darüber hinaus noch eine Tonrufschnittstelle TRSS geschaltet. Über die Tonrufschnittstelle TRSS, die ausgangsseitig mit einer Steuereinrichtung STE (z. B. einem Mikroprozessor) verbunden ist, wird ein auf der Fernsprechleitung TKL übertragenes Tonrufsignal TRS an die Steuereinrichtung STE übertragen.

Die Steuereinrichtung STE ist für die allgemeine Steuerung der Funktionsabläufe in dem Fernsprechendgerät TKEG verantwortlich. So ist die Steuereinrichtung STE - neben der bereits erwähnten Verbindung mit der Tonrufschnittstelle TRSS - u. a. zur Steuerung der Funktionen in der Leitungsanschaltung LAS ausgangsseitig mit der Leitungsanschaltung LAS verbunden.

Der Verpolungsschutz VPS, der an den Primär-Brückenschaltungskontakten VPS-P1, VPS-P2 bereits beschaltet ist, ist an einem ersten Sekundär-Brückenschaltungskontakt VPS-S1 über eine NSI/NSA-Wahlschaltung WS mittelbar und über einen zweiten Sekundär-Brückenschaltungskontakt VPS-S2 unmittelbar mit einer Sprechschaltung SPS verbunden. Sowohl die NSI/NSA-Wahlschaltung WS als auch die Sprechschaltung SPS weisen zusätzlich eine Verbindung zu der Steuereinrichtung STE auf. Während die NSI/NSA-Wahlschaltung WS dabei ausschließlich von der Steuereinrichtung STE angesteuert wird, ist die Verbindung zwischen der Steuereinrichtung STE und der Sprechschaltung SPS bidirektional.

Die Sprechschaltung SPS ist zudem ausgangsseitig einerseits mit einem Mikrofon MIF und einer Hörkapsel HK des dem Fernsprechendgerät TKEG zugeordneten Handapparates (in der Figur 1 nicht dargestellt) und andererseits mit einer Freisprech-/Lauthörschaltung FLS verbunden. Zur Realisierung der Leistungsmerkmale "Freisprechen, Lauthören" durch die Freisprech-/Lauthörschaltung ist diese wiederum ausgangsseitig mit einem Lautsprecher LSP und einem Freisprechmikrofon FMIF verbunden.

Parallel zu der Sprechschaltung SP und der Freisprech-/Lauthörschaltung FLS sind zur Realisierung der eingangs erwähnten Anrufbeantworterfunktion des Fernsprechendgerätes TKEG eine MFV-Empfangseinrichtung EPFE und ein Anrufbeantworter AB geschaltet. Während die MFV-Empfangseinrichtung EPFE und der Anrufbeantworter AB wie die Tonrufschnittstelle TRSS ausgangsseitig mit der Steuereinrichtung STE verbunden sind, ist die Verbindung zwischen der Freisprech-/Lauthörschaltung FLS und der Steuereinrichtung - wie bei der Sprechschaltungs-/Steuereinrichtungsverbindung - bidirektional.

Das in der Figur 1 dargestellte und vorstehend beschriebene Fernsprechendgerät TKEG mit der Anrufbeantworterfunktion führt in bekannter Weise die fersprechendgerätespezifischen Funktionsabläufe durch. So kann z. B. der Anrufbeantworter AB des Fernsprechendgerätes TKEG aufgrund der MFV-Empfangseinrichtung EPFE durch die Übertragung von verschlüsselten MFV-Signalen, sogenannten MFV-Codes, auf der Fernsprechleitung TKL ferngesteuert werden. Die für diese Fernsteuerbarkeit des Anrufbeantworters AB verwendete MFV-Empfangseinrichtung EPFE wird nun zusätzlich hinsichtlich ihrer Funktion, der Erkennung von übertragenen MFV-Codes, doppelt ausgenutzt, indem die MFV-Empfangseinrichtung EPFE zur Unterstützung des Kundenservice verwendet wird.

Bevor im einzelnen diese Unterstützung des Kundenservice erläutert wird, wird die dafür erforderliche Ausgestaltung des Fernsprechendgerätes TKEG nach Figur 1 beschrieben.

Das Fernsprechendgerät TKEG nach Figur 1 weist aufgrund der fernabfragbaren Anrufbeantworterfunktion die entsprechenden Hardwaremittel auf. Bei anderen zu wartenden Telekommunikationsendgeräten als das in Figur dargestellte Fernsprechendgerät TKEG sind diese Hardwaremittel zusätzlich vorzusehen.

Ausgehend von der MFV-Empfangseinrichtung EPFE und deren Verbindung zu der Steuereinrichtung STE ist in der Steuereinrichtung STE eine zentrale Steuereinheit (Central Processing Unit) CPU angeordnet, die von der MFV-Empfangseinrichtung EPFE sowohl die für die Fernsteuerung des Anrufbeantworters AB als auch die für die Unterstützung des Kundenservice Steuerinformationen über die bereits angesprochene Verbindung "Empfangseinrichtung/Steuereinrichtung" erhält. In bezug auf die Unterstützung des Kundenservice ist die zentrale Steuereinheit CPU in der Steuereinrichtung STE einerseits mit einem Zugriffsspeicher (Random Access Memory) RAM und andererseits mit einem programmierbaren Programm-/Datenspeicher SP (z. B. ein PROM, E²-PROM, EPROM etc.) bidirektional verbunden. In dem Programm-/Datenspeicher SP sind sowohl Programmodule PGM als auch für die Unterstützung des Kundenservice verwendete spezifische Wartungsmenüs WTM gespeichert. Der Zugriff auf die Programmodule PGM und Wartungsmenüs WTM durch die zentrale Steuereinheit CPU in Verbindung mit dem Zugriffsspeicher RAM erfolgt dabei in bekannter Weise.

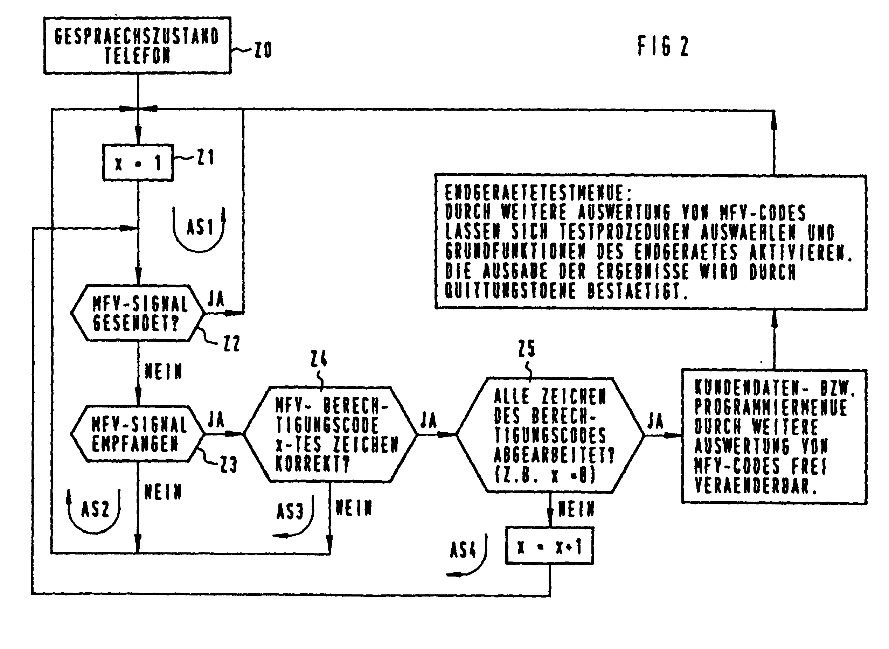

Figur 2 zeigt den Ablauf der Zugriffssteuerung auf die in dem Programm-/Datenspeicher SP gespeicherten Wartungsmenüs WTM des Fernsprechendgerätes TKEG nach Figur 1 anhand eines durch die Programmodule PGM festgelegten Ablaufdiagramms. Hierfür sei folgende Kundensituation angenommen:

Der Besitzer des Fernsprechendgerätes TKEG nach Figur 1 hat über eine standardmäßige Bedienprozedur beispielsweise das Verändern von Namentasten an seinem Endgerät über die Eingabe einer mehrstelligen (z. B. vierstelligen) benutzerindividuellen Identifikationsnummer (z. B. PIN = Personal Identification Number) gesperrt. Das Entsperren der Namentasten ist nur nach Eingabe des vierstelligen Identifikationsnummer möglich. Da der Besitzer des Fernsprechendgerätes TKEG diese Identifikationsnummer vergessen hat, ruft er die für ihn zuständige Service-Leitstelle mit seinem Fernsprechendgerät an. In der Service-Leitstelle befindet sich die in der Figur 1 dargestellte Sendeeinrichtung SE, mit dem das kundenspezifische Fernsprechendgerät TKEG gemäß dem Ablaufdiagramm nach Figur 2 zur Unterstützung des Kundenservice aus der Ferne gewartet werden kann.

Hat der Besitzer des Fernsprechendgerätes TKEG nach Figur 1 über die benutzerindividuelle Identifikationsnummer den Fernsprecher komplett gesperrt und ebenfalls die Identifikationsnummer vergessen, so muß sich diser - nachdem er zuvor die Service-Leitstelle informiert hat - durch den Kundenservice auf das gesperrte Fernsprechendgerät TKEG anrufen lassen.

Durch den Aufbau der Fernsprechverbindung zu der Service-Leitstelle befindet sich das Fernsprechendgerät TKEG in einem Ausgangszustand Z0, der als "Gesprächszustand Telefon" bezeichnet ist. Liegt nun in einem ersten Zustand Z1 ein MFV-Zeichen eines MFV-Codes an, so wird in Abfragezuständen Z2, Z3 der Ursprung des MFV-Zeichens abgefragt. In einem zweiten Abfragezustand Z2 wird dabei überprüft, ob es sich bei dem MFV-Zeichen um ein fernsprechendgerätespezifisches Zeichen handelt, während in einem dritten Abfragezustand Z3 überprüft wird, ob das an der MFV-Empfangseinrichtung EPFE anliegende MFV-Zeichen über die Fernsprechleitung TKL an die MFV-Empfangseinrichtung EPFE gelangt ist.

Mit der Abfrage im Zustand Z2 sollen fernsprechendgeräteeigene MFV-Zeichen unterdrückt werden.

Handelt es sich bei dem in dem Zustand Z1 an der MFV-Empfangseinrichtung EPFE anliegenden MFV-Zeichen um ein fernsprechendgeräteeigenes MFV-Zeichen, so wird eine "positive" erste Abfrageschleife AS1 zwischen dem Abfragezustand Z2 und dem Ausgangszustand Z0 solange durchlaufen, bis im Zustand Z1 an der MFV-Empfangseinrichtung EPFE entweder kein fernsprechendgeräteeigenes MFV-Zeichen oder überhaupt kein MFV-Zeichen - d. h. Vorliegen des Zustands "x = 0" - anliegt.

Liegt im Abfragezustand Z3 weiterhin noch kein MFV-Zeichen (Zustand "x = 0") an der MFV-Empfangseinrichtung EPFE an, so wird eine "negative" zweite Abfrageschleife AS2 zwischen dem Ausgangszustand Z0 und dem Zustand Z3 solange durchlaufen, bis im Zustand Z1 an der MFV-Empfangseinrichtung EPFE ein über die Fernsprechleitung TKL gesendetes erstes MFV-Zeichen eines MFV-Codes anliegt; d. h. der dargestellte Zustand "x = 1" vorliegt. Dieses an der MFV-Empfangseinrichtung EPFE anliegende Zeichen wird nun gemäß der Darstellung in Figur 1 für den Zugriff auf die Wartungsmenüs WTM der zentralen Steuereinheit CPU in der Steuereinrichtung STE zugeführt.

Um den Zugriff auf die in dem Speicher SP der Steuereinrichtung STE gespeicherten Wartungsmenüs WTM kontrollieren zu können, ist es zweckmäßig, den Zugriff mit einer Berechtigung zu belegen. Diese Zugriffsberechtigung wird beispielsweise durch die Abfrage einer fernsprechendgerätespezifischen Berechtigungsnachricht (Ausweisfunktion) geklärt.

Wird für das Fernsprechendgerät TKEG nach Figur 1 von dieser Möglichkeit Gebrauch gemacht, so muß das im Zustand Z1 an der MFV-Empfangseinrichtung EPFE anliegende erste MFV-Zeichen zu einem MFV-Berechtigungscode gehören. Dieser MFV-Berechtigungscode weist beispielsweise acht (x = 1...8) MFV-Berechtigungszeichen auf, die in dem Speicher SP bei der Auslieferung des Fernsprechendgerätes TKEG hinterlegt werden. Um die verschiedenen ausgelieferten Fernsprechendgeräte TKEG unterscheiden zu können, ist in den MFV-Berechtigungszeichen beispielsweise die Gerätenummer des jeweiligen Fernsprechendgerätes TKEG verschlüsselt enthalten.

In Abfragezuständen Z4, Z5 wird von der zentralen Steuereinheit CPU der Steuereinrichtung STE die angesprochene Zugriffsberechtigung geklärt, in dem jedes über die MFV-Empfangseinrichtung EPFE der zentralen Steuereinheit CPU zugeführtes MFV-Zeichen mit dem entsprechenden gespeicherten MFV-Berechtigungszeichen verglichen wird. In einem vierten Abfragezustand Z4 wird dabei jedes von der MFV-Empfangseinrichtung EPFE empfangene und der zentralen Steuereinheit CPU zugeführte MFV-Zeichen (z. B. x = 1...8) mit dem entsprechenden MFV-Berechtigungszeichen verglichen. Stimmt das übermittelte MFV-Zeichen nicht mit dem gespeicherten MFV-Berechtigungszeichen überein, so wird in einer "negativen" dritten Abfrageschleife AS3 zwischen dem Ausgangszustand Z0 und dem Zustand Z4 der Zugriff abgebrochen und das Fernsprechendgerät TKEG für weitere Zugriffe in den Ausgangszustand Z0 zurückgesetzt.

Wird jedoch in dem Zustand Z4 eine Übereinstimmung festgestellt, so wird in einem fünften Zustand Z5 überprüft, ob bereits für sämtliche MFV-Berechtigungszeichen (z. B. x = 1...8) eine Übereinstimmung festgestellt worden ist. Wenn nicht, dann wird in einer "negativen" vierten Abfrageschleife AS4 in einem Zustand Z6 (x = x + 1) ein zweites bzw. nachfolgendes MFV-Zeichen über die MFV-Empfangseinrichtung EPFE der zentralen Steuereinheit CPU zugeführt und von dieser wieder im Zustand Z4 mit dem entsprechenden MFV-Berechtigungszeichen verglichen.

Sind in dem Zustand Z5 alle eingegebenen MFV-Zeichen mit den entsprechenden MFV-Berechtigungszeichen verglichen worden und ist dabei jeweils eine Übereinstimmung festgestellt worden, so liegt die Zugriffsberechtigung für die Wartungsmenüs WTM in dem Speicher SP vor.

Die erfolgreiche Zugriffsberechtigung kann der Service-Leitstelle dabei in vorteilhafter Weise durch einen Quittungston bestätigt werden. Dieser Quittungston wird von der zentralen Steuereinheit CPU beispielsweise über die Verbindung "Leitungsanschaltung/Steuereinrichtung" oder die Verbindung "Sprechschaltung/Steuereinrichtung" und die Fernsprechleitung TKL der Sendeeinrichtung SE zugeführt. Ist die Sendeeinrichtung SE beispielsweise in ein Fernsprechgerät in der Service-Leitstelle integriert, so ist der Quittungston über die dortige Hörkapsel im Handapparat hörbar. Alternativ ist es aber auch möglich, die erfolgreiche Zugriffsberechtigung in dem Fernsprechgerät der Service-Leitstelle optisch anzuzeigen.

In diesem Berchtigungszustand kann die Service-Leitstelle über mindestens einen zweiten MFV-Code, z. B. mehrere MFV-Zugriffscodes mit jeweils mehreren MFV-Zugriffszeichen, auf verschiedene Wartungsmenüs WTM, wie z. B. ein Initialisierungs-, Kundendaten-, Programmier- und Testmenü, zugreifen.

Mit Hilfe der in dem Programm-/Datenspeicher SP gespeicherten Programmodule PGM werden die der zentralen Steuereinheit CPU über die MFV-Empfangseinrichtung EPFE zugführten MFV-Zugriffscodes ausgewertet und in Abhängigkeit von dieser Auswertung z. B. fernsprechendgerätespezifische Daten verändert bzw. zurückgesetzt, Testmodi und Grundfunktionen des Fernsprechendgerätes TKEG aktiviert, etc.

In bezug vorstehend beschriebene Kundensituation bedeutet dies, daß das über die benutzerindividuelle Identifiktionsnummer gesperrte Fernsprechendgerät TKEG durch Rücksetzen der Identifiktionsnummer seitens der Service-Leitstelle auf einfache Weise entsperrt werden kann.

## Patentansprüche

1. Telekommunikationsendgerät
(a) mit einer Empfangseinrichtung (EPFE), die eine der Empfangseinrichtung (EPFE) über einen dem Telekommunikationsendgerät zugeordneten Telekommunikationskanal (TKL) von einer Sendeeinrichtung (SE) gesendete steuerinformationsinhärente Nachricht empfängt,
(b) mit einer Steuereinrichtung (STE, CPU, RAM, SP), die die von der Empfangseinrichtung (EPFE) empfangene Nachricht erhält und aufgrund dieser erhaltenen Nachricht Funktionsabläufe in dem Telekommunikationsendgerät steuert,
**dadurch gekennzeichnet, dass**
in der Steuereinrichtung (STE, CPU, RAM, SP) Mittel (PGM) zur endgerätespezifischen Funktionssteuerung vorhanden sind, die durch einen von der der Sendeeinrichtung (SE) gesendeten Nachricht initialisierten Zugriff auf mindestens ein im Telekommunikationsendgerät gespeichertes Wartungsmenü (WTM) das Ändern oder Testen von Geräteeinstellungen und Programmen des Telekommunikationsendgerätes steuern, indem sie ein Funktionssteuerungsprogramm im Telekommunikationsgerät ohne Mitwirkung der Sendeeinrichtung (SE) und des Benutzers des Telekommunikationsgerätes zum Ablauf bringen.

2. Telekommunikationsgerät nach Anspruch 1, **dadurch gekennzeichnet, dass** im Wartungsmenü (WTM) ein Programm zum Entsperren des Telekommunikationsendgerätes vorhanden ist.

3. Telekommunikationsendgerät nach Anspruch 1 oder 2, **dadurch gekennzeichnet, dass** die Nachricht verschlüsselt ist.

4. Telekommunikationsendgerät nach Anspruch 3, **dadurch gekennzeichnet, dass** die Nachricht mindestens einen MFV-Code aufweist.

5. Telekommunikationsendgerät nach Anspruch 4, **dadurch gekennzeichnet, dass** der MFV-Code als MFV-Berechtigungscode ausgebildet ist.

6. Telekommunikationsendgerät nach Anspruch 4 oder 5, **dadurch gekennzeichnet, dass** der MFV-Code als menüspezifischer MFV-Wartungscode ausgebildet ist.

7. Telekommunikationsendgerät nach Anspruch 1, **dadurch gekennzeichnet, dass** die Mittel (PGM) zur endgerätespezifischen Funktionssteuerung Programmmodule zur Durchführung von folgenden Verfahrensschritten enthalten:
(a) Überprüfen, ob der MFV-Berechtigungscode korrekt ist,
(b) Freigabe des sendegeräteindividuellen Zugriffs bei korrektem MFV-Berechtigungscode,
(c) Auswerten des MFV-Wartungscode und in Abhängigkeit von dieser Auswertung
(c1) Ändern von Daten, Geräteinstellungen und Programmen im Initialisierungsmenü,
(c2) Durchführen von Testprozeduren und Aktivieren von Grundfunktionen des Telekommunikationsendgerätes im Endgerätetestmenü,
(d) Bestätigen der auswertungsabhängigen Vorgänge in den Merkmalen c1, c2 durch Quittungstöne.

8. Telekommunikationsendgerät nach einem der Ansprüche 1 bis 7, **dadurch gekennzeichnet, dass** das Telekommunikationsendgerät als Telefon mit integriertem Anrufbeantworter ausgebildet ist.

9. Telekommunikationsendgerät nach einem der Ansprüche 1 bis 7, **dadurch gekennzeichnet, dass** das Telekommunikationsendgerät als drahtloses Telefon eines drahtlosen Telekommunikationssystems ausgebildet ist.

10. Telekommunikationsendgerät nach einem der Ansprüche 4 bis 7, **dadurch gekennzeichnet, dass** die Sendeeinrichtung (SE) als MFV-Sendeeinrichtung ausgebildet ist, die in dem Telekommunikationsendgerät angeordnet ist.

11. Telekommunikationsendgerät nach einem der Ansprüche 1 bis 10, **dadurch gekennzeichnet, dass** die Sendeeinrichtung (SE) als ein an den Telekommunikationskanal (TKL) anschließbarer Personal Computer ausgebildet ist.

## Claims

1. Telecommunication terminal device
(a) comprising a receiving device (EPFE) which receives a message, containing control information, sent to the receiving device (EPFE) by a transmitting device (SE) via a telecommunication channel (TKL) assigned to the telecommunication terminal device,
(b) comprising a control device (STE, CPU, RAM, SP), which receives the message received by the receiving device (EPFE) and, based upon this received message, controls functional flows in the telecommunication terminal device,
**characterised in that**
means (PGM) are available in the control device (STE, CPU, RAM, SP) for controlling functions specific to the terminal device, which means, through access to at least one maintenance menu (WTM) stored in the telecommunication terminal device, said access being initialized by the message sent to the transmitting device (SE), control the modifying or testing of device settings and programs of the telecommunication terminal device by starting up a functional control program in the telecommunication terminal device without the involvement of the transmitting device (SE) and of the user of the telecommunication device.

2. Telecommunication device according to Claim 1, **characterised in that** a program is available in the maintenance menu (WTM) for unblocking the telecommunication terminal device.

3. Telecommunication terminal device according to Claim 1 or Claim 2, **characterised in that** the message is encrypted.

4. Telecommunication terminal device according to Claim 3, **characterised in that** the message comprises at least one DTMF code.

5. Telecommunication terminal device according to Claim 4, **characterised in that** the DTMF code is fashioned as a DTMF authorization code.

6. Telecommunication terminal device according to Claim 4 or Claim 5, **characterised in that** the DTMF code is fashioned as a menu-specific DTMF maintenance code.

7. Telecommunication terminal device according to Claim 1, **characterized in that** the means (PGM) for controlling functions specific to the terminal device contain program modules for implementing the following process steps:
(a) checking whether the DTMF authorization code is correct,
(b) releasing access specific to the transmitting device if the DTMF authorization code is correct,
(c) evaluating the DTMF maintenance code and, depending upon this evaluation,
(c1) modifying data, device settings and programs in the initialization menu,
(c2) implementing test procedures and activating basic functions of the telecommunication terminal device in the terminal device test menu,
(d) confirming the evaluation-dependent procedures in features c1, c2 by means of acknowledgement tones.

8. Telecommunication terminal device according to any one of Claims 1 to 7, **characterised in that** the telecommunication terminal device is fashioned as a telephone with integrated answering machine.

9. Telecommunication terminal device according to any one of Claims 1 to 7, **characterised in that** the telecommunication terminal device is fashioned as a wireless telephone of a wireless telecommunication system.

10. Telecommunication terminal device according to any one of Claims 4 to 7, **characterised in that** the transmitting device (SE) is fashioned as a DTMF transmitting device which is arranged in the telecommunication terminal device.

11. Telecommunication terminal device according to any one of Claims 1 to 10, **characterised in that** the transmitting device (SE) is fashioned as a personal computer that can be connected to the telecommunication channel (TKL).

## Revendications

1. Terminal de télécommunication
(a) comprenant un dispositif de réception (EPFE) qui reçoit un message inhérent d'information de commande, émis au dispositif de réception (EPFE) par un dispositif d'émission (SE) via un canal de télécommunication (TKL) affecté au terminal de télécommunication,
(b) comprenant un dispositif de commande (STE, CPU, RAM, SP) qui reçoit le message reçu par le dispositif de réception (EPFE) et, en raison de ce message reçu, commande des déroulements de fonctions dans le terminal de télécommunication,
**caractérisé en ce que**
des moyens (PGM) sont présents dans le dispositif de commande (STE, CPU, RAM, SP) pour la commande de fonctions spécifique au terminal, qui commandent la modification ou le test de réglages d'appareils et de programmes du terminal de télécommunication au moyen d'un accès à au moins un menu de maintenance (WTM) mémorisé dans le terminal de communication, cet accès étant initialisé par le message émis par le dispositif d'émission (SE), du fait qu'ils mettent en exécution un programme de commande de fonctions dans le terminal de télécommunication, sans collaboration du dispositif d'émission (SE) ni de l'utilisateur du terminal de télécommunication.

2. Terminal de télécommunication selon la revendication 1, **caractérisé en ce qu'**un programme pour débloquer le terminal de télécommunication est présent dans le menu de maintenance (WTM).

3. Terminal de télécommunication selon la revendication 1 ou 2, **caractérisé en ce que** le message est codé.

4. Terminal de télécommunication selon la revendication 3, **caractérisé en ce que** le message présente au moins un code MFV.

5. Terminal de télécommunication selon la revendication 4, **caractérisé en ce que** le code MFV est réalisé comme code d'autorisation MFV.

6. Terminal de télécommunication selon la revendication 4 ou 5, **caractérisé en ce que** le code MFV est réalisé comme code de maintenance MFV spécifique au menu.

7. Terminal de télécommunication selon la revendication 1, **caractérisé en ce que** les moyens (PGM) pour la commande de fonctions spécifique au terminal comprennent des modules de programme pour la réalisation des étapes de procédé suivantes :
(a) vérifier si le code d'autorisation MFV est correct,
(b) libérer l'accès individuel au dispositif d'émission en cas de code d'autorisation MFV correct,
(c) évaluer le code de maintenance MFV et, en fonction de cette évaluation,
(c1) modifier des données, des réglages d'appareils et des programmes dans le menu d'initialisation,
(c2) exécuter des procédures de test et activer des fonctions de base du terminal de télécommunication dans le menu de test du terminal,
(d) confirmer les opérations dépendant de l'évaluation dans les caractéristiques c1, c2 par des tonalités d'accusé de réception.

8. Terminal de télécommunication selon l'une quelconque des revendications 1 à 7, **caractérisé en ce que** le terminal de télécommunication est réalisé comme téléphone avec répondeur automatique intégré.

9. Terminal de télécommunication selon l'une quelconque des revendications 1 à 7, **caractérisé en ce que** le terminal de télécommunication est réalisé comme téléphone sans fil d'un système de télécommunication sans fil.

10. Terminal de télécommunication selon l'une quelconque des revendications 4 à 7, **caractérisé en ce que** le dispositif d'émission (SE) est réalisé comme dispositif d'émission MFV qui est disposé dans le terminal de télécommunication.

11. Terminal de télécommunication selon l'une quelconque des revendications 1 à 10, **caractérisé en ce que** le dispositif d'émission (SE) est réalisé comme un ordinateur personnel connectable au canal de télécommunication (TKL).
